# EUROPEAN PATENT APPLICATION

(11) **EP 1 956 592 A2**
(43) Date of publication of application: **13.08.2008**
(21) Application number: 08002470.6
(22) Date of filing: 11.02.2008
(51) Int. Cl.: G11B 5/86

(54) **Transfer apparatus, transfer method, recording medium, and magnetic recording apparatus**

(30) Priority: 09.02.2007 JP 2007031121
(71) Applicant: Fujifilm Corporation, Tokyo 106-8620 (JP)
(72) Inventor: Horikawa, Takatoshi, Minami-Ashigara-shi Kanagawa (JP); Fujinami, Tatsuya, Odawara-shi Kanagawa (JP)
(74) Representative: Grünecker, Kinkeldey, Stockmair & Schwanhäusser Anwaltssozietät

(57) **Abstract**

A transfer apparatus comprises: a master carrier (10A,10B) on which a minute concave-convex shape is formed; a slave medium to which the concave-convex shape or transfer information expressed by the concave-convex shape is to be transferred; and a holder (2) which holds the slave medium and to which the master carrier is fixed. In the transfer apparatus, the positioning of the master carrier and the slave medium (14) is precisely performed, and master carrier and the slave medium are pressed together by hydrostatic pressure, and magnetic transfer is performed. As a result, it is possible to perform the transfer operation with high efficiency and excellent productivity.

## Description

### BACKGROUND OF THE INVENTION

### Field of the Invention

The present invention relates to a transfer apparatus, a transfer method, a recording medium, and a magnetic recording apparatus, in each of which either a minute concave-convex shape or transfer information expressed by the concave-convex shape is transferred to a slave medium by a master carrier on which the concave-convex shape is formed.

### Description of the Related Art

In recent years, various information recording media, such as a magnetic disk, an optical disk, and a magneto-optical disk have been required to be reduced in size and to be increased in capacity. Also, electronic devices, optical devices, and the like, have been miniaturized and required to be mass-produced because of the spread or the like of portable terminals. According to such background, for example, in the recording media, the recorded track width of a recording signal bit and the magnetization inversion length in a line recording direction are reduced to several hundreds to tens of nm.

In order to accurately extract information from the recording media made to have narrow tracks, it is necessary to precisely scan a magnetic head for reading and writing information in the narrow track width. Thus, a servo signal for tracking, an address information signal, a reproduction clock signal and the like are preformatted and recorded at a predetermined interval in the magnetic disk, in order to enable the tracking servo of the magnetic head to be performed.

The recording of the signals can also be performed by the magnetic head. However, it is efficient and preferable to use a method for performing collective transfer from a master disk as a master carrier on which the format information and the address information are written. For example, there is proposed a magnetic transfer method in which a slave disk as a slave medium to be a high density magnetic recording medium, and a master disk having a magnetic layer of a concave-convex pattern corresponding to information to be transferred are prepared, and in which the magnetic layer of the slave disk is initially magnetized beforehand in one direction of the truck, and thereafter a transfer magnetic field whose direction is substantially opposite to the initial magnetizing direction is applied in the state where the initially magnetized slave disk and the master disk are brought into close contact with each other (see, for example, Japanese Patent Application Laid-Open No. 2001-14667).

Further, there is also a problem about the erasing noise and crosstalk noise between adjacent tracks due to the increase in track density, or a problem about the demagnetization or the like caused by the thermal fluctuation of recording magnetization due to the increase in line recording density. In order to cope with such problems, there are also proposed magnetic recording media referred to as discrete track media or patterned media.

In the magnetic recording media in the form referred to as the discrete track media or the patterned media, it is necessary to pattern the surface of the magnetic recording media into a predetermined shape. In the patterning, it is difficult to minutely process the whole recording medium. Thus, similarly to the case of mass-producing small-sized electronic devices and optical devices, an imprint method is used, in which a master disk (stamper) having a predetermined shape pattern formed thereon is pressed against a slave disk, and thereby the shape on the master disk is transferred to the slave disk.

In any of the above described transfer methods of the recording media, it is important to press the whole surfaces of the master disk and the slave disk by uniform force so as to bring the master disk and the slave disk into close contact with each other. When the contact state between the master disc and the slave disk is defective, signal missing is generated in the transferred information, which results in deterioration of the signal quality. For example, when the recorded signal is a servo signal, a sufficient tracking function cannot be obtained, so as to cause a problem of reliability degradation. In order to cope with such problem, there is proposed, for example, a holder of a magnetic transfer apparatus for holding the master disk, in which a shock absorbing material is provided to improve the close contact property (see, for example, Japanese Patent Application Laid-Open No. 2004-86995).

However, in such pressing method using the holder and the shock absorbing material, there is a limit in the processing accuracy of the holder and the shock absorbing material. Thus, there is a problem that depending upon the processing accuracy of the members, the master carrier is deformed when pressure is applied, and thus, a difference between the shape formed on the master carrier and the transferred shape is caused.

For this reason, as a method for pressing the master carrier with a uniform pressure without depending upon the processing accuracy of the members, a method for pressing the master carrier by fluid is conceivable. In the pressing by fluid, the slave medium and the master carrier are positioned to be brought into close contact with each other, and thereafter are disposed in a closed container. The fluid is then supplied to the closed container. Thereby, the master carrier is uniformly pressed over the whole surface thereof, so as to be brought into precise and close contact with the slave medium.

However, in the case where the master carrier is pressed by the fluid pressure, the slave medium and the master carrier which are precisely positioned to each other, need to be supplied to the inside of the closed container. Further, in the case where the master carrier is pressed by the fluid pressure through a flexible film or the like, it is necessary to position the flexible film on the master carrier each time the transfer operation is performed, which results in a cause for reduction of the productivity.

### SUMMARY OF THE INVENTION

The present invention has been made in view of the above described problems. An object of the present invention is to provide a transfer apparatus, a transfer method, a recording medium, and a magnetic recording apparatus, for faithfully reproducing on the slave medium a concave-convex shape formed on the master carrier or the transfer information expressed by the concave-convex shape with high productivity.

In order to achieve the above described object, a transfer apparatus according to a first aspect of the present invention comprises: a master carrier on which a minute concave-convex shape is formed; a slave medium to which the concave-convex shape or transfer information expressed by the concave-convex shape is to be transferred; and a holder which holds the slave medium and to which the master carrier is fixed.

According to the first aspect of the present invention, a holding section for holding the central part of the slave medium is provided in the holder.

When the slave medium is supplied by the supply device to fit to the corresponding position of the master carrier, the holder holds the slave medium by the holding section, to make a holder moving device clip (sandwich) the slave medium by the master carrier. At this time, the master carrier is pressed by the fluid pressure so as to be brought into close contact with the slave medium.

Thereby, in the transfer apparatus according to the first aspect of the present invention, the positioning of the master carrier and the slave medium is precisely performed, and the work for supplying the master carrier may be simplified. As a result, it is possible to perform the transfer operation with high efficiency and excellent productivity.

Further, according to a second aspect of the invention, in the transfer apparatus according to the first aspect of the present invention, the mater carrier has a periphery where the concave-convex shape is not formed and the master carrier is fixed to the holder at the periphery.

According to a third aspect of the present invention, the transfer apparatus according to the first aspect of the present invention may further comprises: a flexible film which presses the master carrier against the slave medium by a fluid pressure, wherein the flexible film is fixed to the holder at a periphery of the flexible film and the master carrier is fixed to the holder through the flexible film by fixing the master carrier to a central part of the flexible film.

In this aspect of the present invention, the master carrier is fixed to the central part of the flexible film, and the periphery of the flexible film, on which periphery the master carrier is not fixed, is fixed to the holder.

After the slave medium and the master carrier which are supplied to the holder are precisely positioned to each other, the holder holds the slave medium and the master carrier by the holding section, and moves to clip (sandwich) the slave medium and the master carrier with the flexible film. At this time, the flexible film presses the master carrier by the fluid pressure, so as to bring the master carrier into close contact with the slave medium.

When the slave medium is supplied to fit to the corresponding position of the master carrier, the holder holds the slave medium by the holding section, and moves to clip (sandwich) the slave medium by the master carrier fixed to the flexible film. At this time, the flexible film presses the master carrier by the fluid pressure so as to bring the master carrier into close contact with the slave medium.

Thereby, in the transfer apparatus according to this aspect of the present invention, the positioning of the master carrier and the slave medium is precisely performed, and the work for attaching the flexible film is simplified. As a result, it is possible to perform the transfer operation with high efficiency and excellent productivity.

According to a fourth aspect of the present invention, the transfer apparatus according to one of the first, second and third aspects of the present invention, may further comprises: a space formed between the holder and the master carrier; a pressing device which supplies fluid into the space; and a pressure reducing device which discharges fluid in a space in the holder except the space formed between the holder and the master carrier.

According to the fourth aspect of the present invention, the transfer apparatus includes the pressing device which supplies fluid into the space created between the holder and master carrier, and the pressure reducing device which discharges the fluid in the closed space in the holder except the space created between the holder and the flexible film fixed to the holder, or the space created between the holder and the master carrier. It should be noted that according to the third aspect, as the master carrier is fixed to the holder through the flexible film, the flexible film exists between the holder and the master carrier.

In the transfer apparatus, the slave medium held in contact with the master carrier is clipped (sandwiched) by the holder, and thereafter the fluid is supplied by the pressing device. Thereby, the master carrier is pressed, so as to be brought into close contact with the slave medium.

Further, in the transfer apparatus, the slave medium held in contact with the master carrier is clipped (sandwiched) by the holder, and thereafter the pressure inside the closed space in the holder is reduced to be lower than the atmospheric pressure by the pressure reducing device, so that the holder is pressed by the atmospheric pressure, to be closed in the close contact state.

Thereby, in the transfer apparatus according to the fourth aspect of present invention, large-sized devices such as a pressing device for pressing the master carrier, and a cylinder necessary for hermetically opening and closing the holder are not needed. Thus, the apparatus can be made compact in size, and the transfer operation with high efficiency and excellent productivity can be performed.

According to a fifth aspect of the present invention, in the transfer apparatus according to the fourth aspects of the present invention, the space is created by fixing the master carrier on (or over) a hole formed in the holder. In other word, the master carrier is placed to cover the hole formed by scraping a surface of the holder to make the space between the master carrier and the bottom of the hole. It should be noted that when the master carrier is fixed to the holder through the flexible film, the flexible film exists between the holder and the master carrier.

According to the fifth aspect of the present invention, the hole is formed by digging a part on the inside of the holder. The periphery of the master carrier or the flexible film is fixed around the hole, so that the space is formed between the holder and the flexible film or between the holder and the master carrier.

In the space formed between the master carrier and the holder (or between the flexible film and the holder), the interval between the members is sufficiently secured by the hole formed in the holder, and hence the space is prevented from being closed by the bending or the like of the flexible film or of the master carrier, which bending is caused when the holder is closed. Thereby, the fluid is surely supplied to the inside of the space to press the master carrier, so that the master carrier can be brought into close contact with the slave medium.

According to a sixth aspect of the present invention, in the transfer apparatus according to one of the first, second, third, fourth and fifth aspects of the present invention, the master carrier is fixed to the holder by at least one or more methods of an adhesive, welding, fixing by a fixing device, and joining by magnetic force.

According to the sixth aspect of the present invention, the master carrier is surely fixed to the holder without a gap, so that it is possible to stably perform the transfer operation without the fluid flowing out of the fixing part at the time of supplying or discharging the fluid.

According to a seventh aspect of the present invention, in the transfer apparatus according to one of the first, second, third, fourth, fifth and sixth aspects of the present invention, the master carriers is brought into close contact with both sides of the slave medium, when performing a transfer operation.

According to the seventh aspect of the present invention, the transfer apparatus of the present invention, when performing the transfer operation, performs the transfer operation by simultaneously bringing mutually different master carriers into close contact with both sides of the slave medium. Thereby, it is possible to perform the transfer operation with high efficiency and excellent productivity.

According to an eighth aspect of the present invention, in the transfer apparatus according to one of the first, second, third, fourth, fifth, sixth and seventh aspects of the present invention, further comprises a supply device for supplying the slave medium and the master carrier to the holder.

In the transfer apparatus according to the eighth aspect of the present invention, before the transfer operation is started, the slave medium and the master carrier are automatically precisely positioned and supplied by the supply device, and are held by the holding section provided in the holder.

According to a ninth aspect of the present invention, in the transfer apparatus according to one of the first, second, third, fourth, fifth, sixth, seventh and eighth aspects of the present invention, comprises a holder moving device which moves the holder.

In the transfer apparatus according to the ninth aspect of the present invention, the slave medium and the master carrier are automatically precisely positioned and supplied by the supply device, and thereafter are held by the holding section provided in the holder. Then, the holder automatically starts to be moved by the holder moving device to clip (sandwich) the slave medium and the master carrier.

Further, a transfer method including performances embodied by the transfer apparatus according to the aspects of the present invention can achieve the same effects and advantages as the transfer apparatus.

As described above, according to the transfer apparatus, the transfer method, the recording medium, and the magnetic recording apparatus of the present invention, the positioning of the master carrier and the slave medium is precisely performed by the supply device, and the work for attaching the flexible film or the master carrier is simplified. As a result, it is possible to perform the transfer operation with high efficiency and excellent productivity.

### BRIEF DESCRIPTION OF THE DRAWINGS

Fig. 1 is a perspective view of a major portion of a magnetic transfer apparatus adapted to perform a magnetic transfer operation;
Fig. 2 is a plan view showing a method for applying a transfer magnetic field;
Figs. 3A and 3B are explanatory views for explaining a basic process of a magnetic transfer method;
Fig. 4 is a perspective view showing a transfer apparatus according to an embodiment of the present invention;
Fig. 5 is a sectional view of the transfer apparatus according to the embodiment of the present invention at the time of performing the transfer operation;
Fig. 6 is a perspective view showing another transfer apparatus according to an embodiment of the present invention; and
Fig. 7 is a sectional view of the other transfer apparatus according to the embodiment of the present invention at the time of performing the transfer operation.

### DETAILED DESCRIPTION OF THE PREFERRED EMBODIMENTS

In the following, preferred embodiments of a transfer apparatus, a transfer method, a recording medium, and a magnetic recording apparatus according to the present invention will be described in detail with reference to the accompanying drawings.

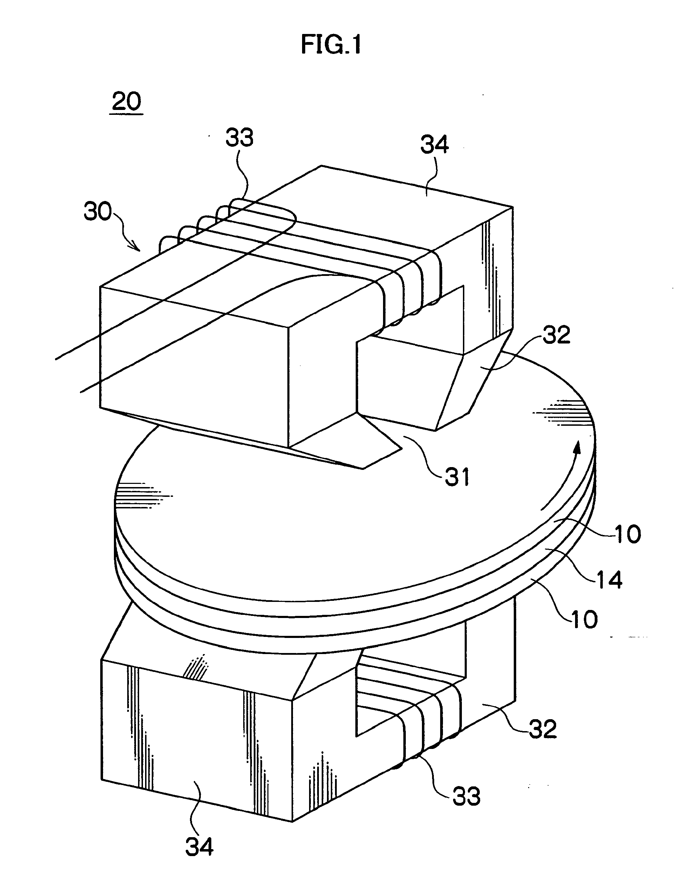

First, there is described a magnetic transfer method used as a technique for manufacturing a hard disk or the like, to which a transfer apparatus and a transfer method according to the present invention are applied. Fig. 1 is a perspective view of a major portion of a magnetic transfer apparatus 20 for performing a magnetic transfer operation by using a master disk 10 as a slave medium.

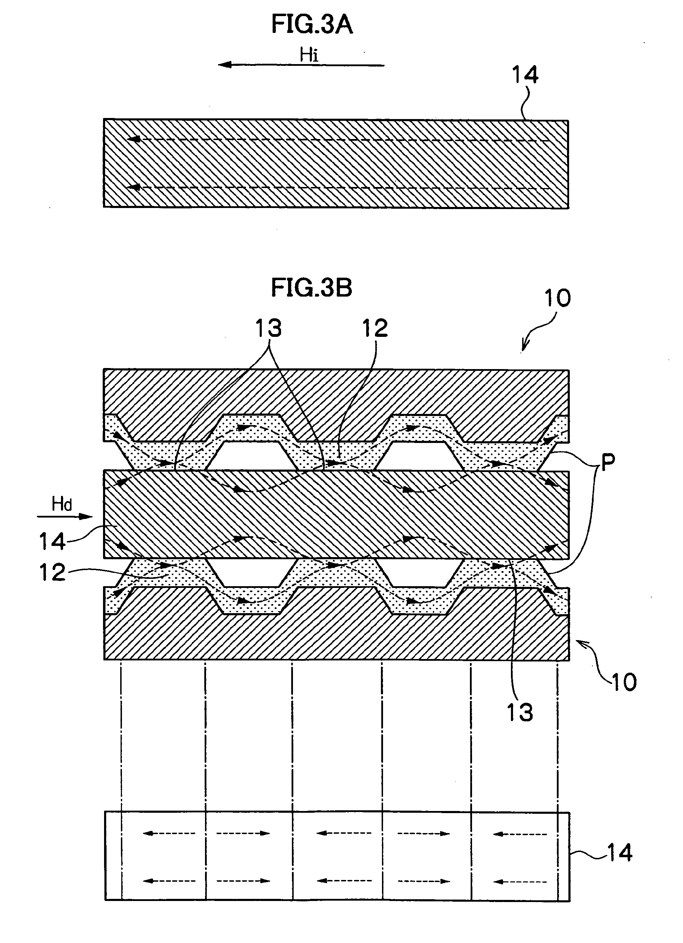

When the magnetic transfer operation is performed, a slave surface (magnetic recording surface) of a slave disk 14 as a slave medium, which has been initially DC-magnetized as shown in Fig. 3A as will be described below, is held in contact with the information carrying surface 13 of the master disk 10 as a master carrier, and is brought into close contact with the information carrying surface of the master disk 10 by a predetermined pressing force. Then, in the state where the slave disk 14 and the master disk 10 are held in close contact with each other, a transfer magnetic field is applied by a magnetic field generating device 30, and thereby a concave-convex pattern P as transfer information which is formed on the master disk 10 is magnetically transferred to the slave disk 14.

The slave disk 14 is a disc-like recording medium such as a flexible disk, a hard disk, on the surface of which a magnetic recording layer is formed. Before being brought into close contact with the master disk 10, the slave disk 14 is subjected, when necessary, to cleaning processing (burnishing or the like) for removing minute protrusions and adherent dust on the surface thereof by a glide head, a polishing element, or the like.

As the magnetic recording layer of the slave disk 14, a coating type magnetic recording layer, a plating type magnetic recording layer, and a metal thin film type magnetic recording layer can be adopted. As a magnetic material of the metal thin film type magnetic recording layer, it is possible to use Co, a Co alloy (CoPtCr, CoCr, CoPtCrTa, CoPtCrNbTa, CoCrB, CoNi or the like), Fe, an Fe alloy (FeCo, FePt, FeCoNi or the like), and Ni, a Ni alloy (NiFe or the like). These materials have a large magnetic flux density and the magnetic anisotropy in the same direction (in-plane direction in the case of in-plane recording) as the magnetic field applying direction, and hence the materials are preferred for providing clear transfer. In addition, it is preferred to provide a non-magnetic underlayer under the magnetic material (on the supporting body side), in order to impart the necessary magnetic anisotropy. The underlayer needs to have the same crystal structure and lattice constants as those of the magnetic layer 12. To this end, it is preferred to use Cr, CrTi, CoCr, CrTa, CrMo, NiAI, Ru, and the like.

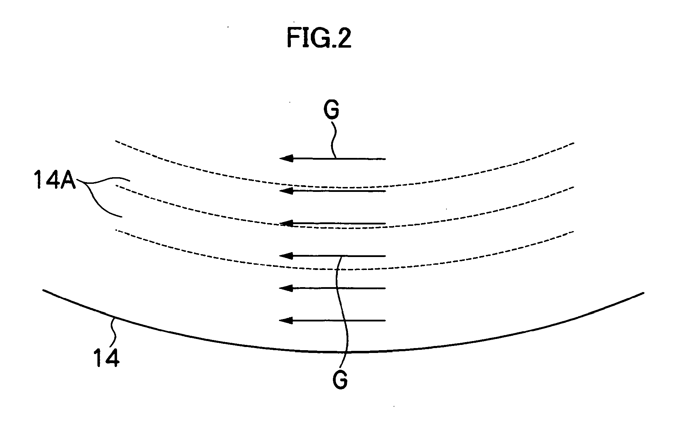

As showing in Fig. 1, in the magnetic field generating device 30 for applying the transfer magnetic field, electromagnet devices 34 and 34 are arranged on both upper and lower sides of the slave disk 14 and the master disk 10 which are held in close contact with each other. In the electromagnet device 34, a coil 33 is wound around a core 32 having a gap 31 extending in the radial direction of the slave disk 14 and the master disk 10. The magnetic field generating device 30 applies transfer magnetic fields having magnetic lines of force G (see Fig. 2) which are in the same direction on both the upper and lower sides and in parallel with the track direction. Fig. 2 shows a relation between circumferential tracks 40A, 40A ..., and the magnetic lines of force G.

At the time of applying the magnetic field, while the slave disk 14 and the master disk 10 are integrally rotated, the transfer information expressed by the concave-convex pattern on the master disk 10 is magnetically transferred to the slave surface of the slave disk 14 by applying the transfer magnetic field by the magnetic field generating device 30. It should be understood that other than the above described configuration, it can also be configured such that the magnetic field generating device 30 is rotated.

The transfer magnetic field generates in a portion in the track direction a magnetic field having a magnetic field distribution, in which the magnetic field strength does not exceed a maximum value in an optimum transfer magnetic field strength range (0.6 to 1.3 times the coercive force Hc of the slave disk 14) in any track direction, in which the magnetic field strength is within the optimum transfer magnetic field strength range in at least one or more portions in one track direction, and in which the magnetic field strength in the track direction opposite to the one track direction is less than a minimum value in the optimum transfer magnetic field strength range in any portion in the track direction.

Figs. 3A and 3B are explanatory views for explaining a basic process of the magnetic transfer method by in-plane recording.

First, as shown in Fig. 3A, an initial magnetic field Hi is applied beforehand to the slave disk 14 in one track direction, so that the slave disk 14 is subjected to initial magnetization (DC demagnetization). Next, as shown in an upper portion of Fig. 3B, the recording surface (magnetic recording section) of the slave disk 14 is held in close contact with the information carrying surface 13 of the master disk 10, on which surface the concave-convex pattern P is formed. Then, a transfer magnetic field Hd is applied in a track direction of the slave disk 14, and in the direction opposite to the direction of the initial magnetic field Hi, so that the magnetic transfer operation is performed. The transfer magnetic field Hd is absorbed by the magnetic layer 12 of the convex part of the concave-convex pattern P, then the magnetization of the part of the slave disk 14, the part corresponds to the convex part, is not reversed, and the magnetization of the other part of the slave disk 14 is reversed. As a result, as shown in a lower portion of Fig. 3B, the transfer information expressed by the concave-convex pattern P of the master disk 10 is magnetically transferred to and recorded on the magnetic recording surface of the slave disk 14.

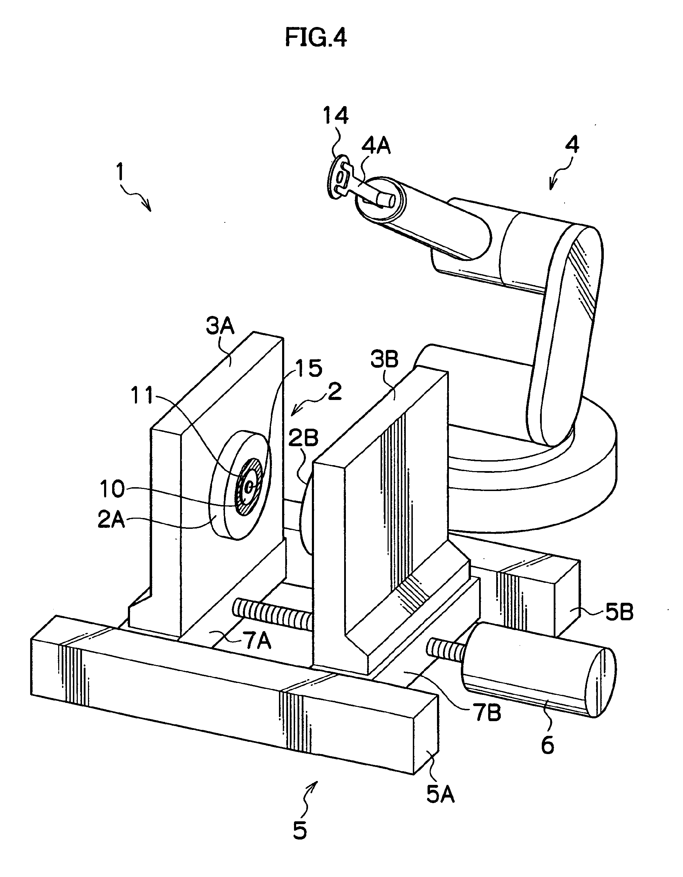

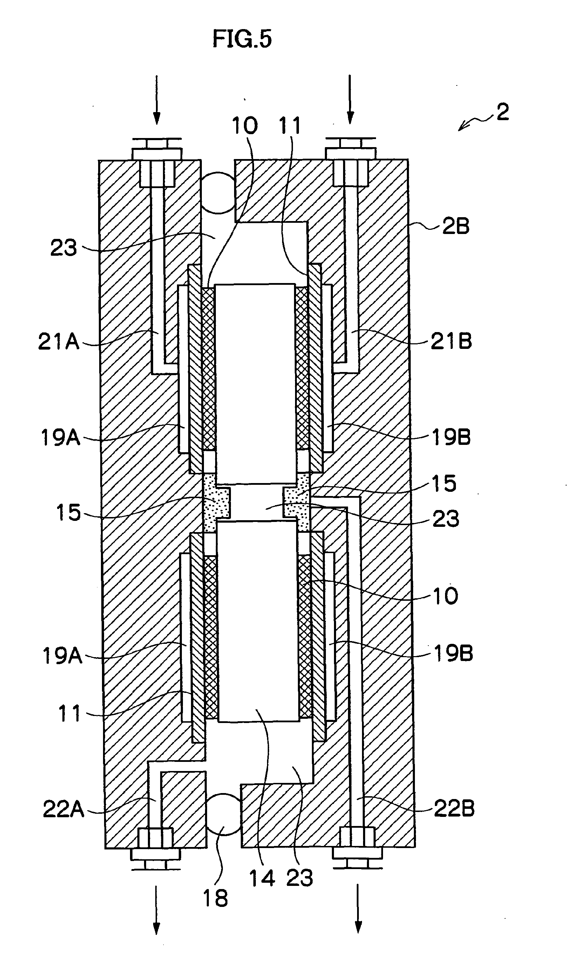

Next, a transfer apparatus, a transfer method, a recording medium, and a magnetic recording apparatus according to an embodiment of the present invention will be described. Fig. 4 is a perspective view showing the transfer apparatus according to an embodiment of the present invention, and Fig. 5 is a sectional view of the transfer apparatus at the time of performing the transfer operation.

A transfer apparatus 1 includes, as shown in Fig. 4, a holder 2 for holding the master disk 10 and the slave disk 14, a guide shaft 5 as a holder moving device for moving the holder 2, and a robot arm 4 as a supply device for supplying the master disk 10 or the slave disk 14 to the holder 2.

The holder 2 is a closed container capable of holding therein the master disk 10 and the slave disk 14 in the state where the master disk 10 and the slave disk 14 are held in contact with each other, and can be divided into two of a case 2A and a case 2B. The cases 2A and 2B are provided on holder bases 3A and 3B provided on tables 7A and 7B, respectively.

A sucking sections 15 for holding the master disk 10 or the slave disk 14 are formed in the cases 2A and 2B, respectively. The circumference of the sucking section 15 is dug as shown in Fig. 5, so that a hole is formed. A sheet 11 as a flexible film formed of a stainless material, a PET resin, and the like, is fixed at the periphery thereof to the circumference of the each hole, so as to form spaces 19A and 19B.

The sheet 11 is fixed to each of the cases 2A and 2B by using an adhesive, welding, a fixing device such as a bolt, or a magnet. The sheet 11 presses the master disk 10 with fluid such as air and water supplied from flow channels 21 A and 21 B into the spaces 19A and 19B by a pressing device (not shown).

The guide shaft 5 includes, between guides 5A and 5B, the tables 7A and 7B provided with the holder bases 3A and 3B, and detachably moves the tables 7A and 7B by a driving device 6, such as a motor and an air cylinder. This enables the cases 2A and 2B to be brought into close contact with each other, and enables the cases 2A and 2B to be detached from each other so that the master disk 10 or the slave disk 14 can be supplied, positioned and taken out.

The robot arm 4 is a multi-joint arm type robot, and has at the tip of the arm a holding hand 4A for holding the master disk 10 or the slave disk 14 by sucking or grasping the disk. The robot arm 4 holds, by the holding hand 4A, the master disk 10 or the slave disk 14 stored in a disk supply section (not shown), so as to supply and position the disk to the holder 2. After the transfer operation is finished, the robot arm 4 also conveys the master disk 10 or the slave disk 14 from the holder 2 to the disk supply section.

Note that the multi-joint arm type robot is used as the supply device in the present embodiment, but the present invention is not limited to this. Even a conveyance mechanism configured by combining a guide shaft, a motor, a cylinder and the like, may also be used as the supply device. Any form of the conveyance mechanism may be used, as long as the mechanism makes it possible to supply, position and convey the master disk 10 or the slave disk 14.

According to the transfer method of the present invention, in the transfer apparatus having such configuration, the master disk 10 is fixed beforehand to the central part of the sheet 11 fixed to each of the cases 2A and 2B by a method such as adhesion.

The slave disk 14 is supplied by the robot arm 4 on one of the master disks 10 which are fixed to the cases 2A and 2B in this state. The supplied slave disk 14 is positioned by the robot arm 4 to fit the position of the concave-convex shape formed on the master disk 10, and is held on the master disk 10 by the sucking section 15.

In the state where the slave disk is held, the tables 7A and 7B are made to approach each other by the moving device 6. Thereby, as shown in Fig. 5, the cases 2A and 2B are brought into close contact with each other by sandwiching therebetween a sealing material 18 formed of nitrile rubber or the like, so that the inside of the cases is sealed. By discharging air in a space 23 in the holder 2 except in the spaces 19A and 19B by a pressure reducing device (not shown) from flow channels 22A and 22B, the holder 2 held in the sealed-state is made to be pressed by the atmospheric pressure from the outside, so as to be surely closed.

At this time, the interval in the spaces 19A and 19B is sufficiently secured by the holes formed in the cases 2A and 2B. Thus, the spaces 19A and 19B are prevented from being closed due to the bending or the like of the sheets 11 at the time when the cases 2A and 2B are closed.

Thereby, fluid such as air and water is surely supplied by a pressing device (not shown) from the flow channels 21A and 21B to the spaces 19A and 19B, so that the master disks 10 held in contact with both the surfaces of the slave disk 14 are pressed by the sheets 11.

The master disks 10 pressed by the sheets 11 are pressed to both the surfaces of the slave disk 14, respectively. Since the master disk 10 is pressed by fluid, the master disk 10 is uniformly pressed over the whole surface thereof, so as to be held in precise and close contact with the slave disk 14.

In this state, in the case where a recording medium is manufactured, the magnetic transfer operation is performed on the basis of the above described magnetic transfer procedure, so that the transfer information expressed by the concave-convex shape formed on the master disk 10 is magnetically transferred to the slave disk 14.

The manufactured magnetic recording medium is assembled with devices, such as a magnetic head for magnetically reading and writing information, and a spindle for rotating the magnetic recording medium at high speed, so as to be formed as a magnetic recording apparatus.

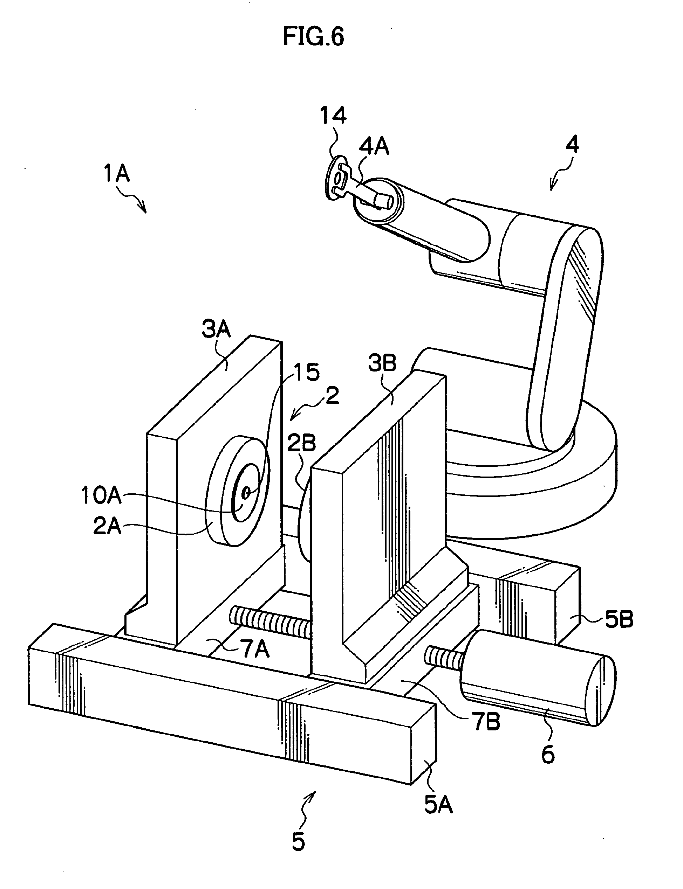

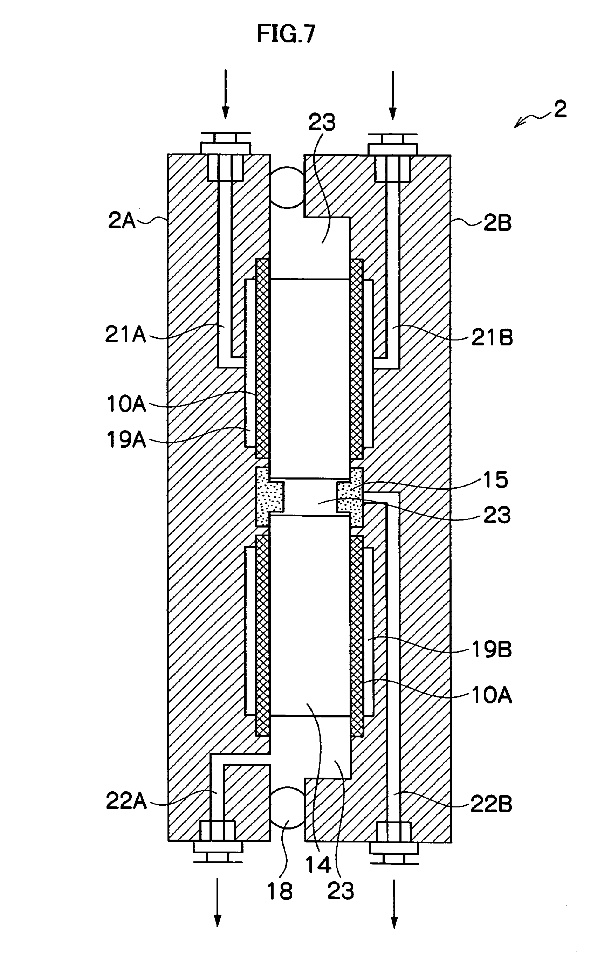

Note that the master disk 10 is pressed by the sheet 11 in the present embodiment, but the present invention is not limited to this. As shown in Fig. 6 and Fig. 7, it may also be configured such that, similarly to the sheet 11, a master disk 10A having an outer diameter larger than the slave disk 14 is fixed at the periphery thereof around the hole formed in the cases 2A and 2B by using an adhesive, welding, a fixing device such as a bolt, or a magnet, so as to form the spaces 19A and 19B.

In the transfer method using the apparatus configured in this manner, as shown in Fig. 7, in the state where the slave disk 14 and the master disk 10A are held in close contact with each other in the holder 2 which is in the sealed state, the master disk 10A is pressed toward the slave disk 14 by supplying fluid such as air and water by the pressing device (not shown), or by discharging the air by the pressure reducing device.

Since the master disk 10A is pressed by the fluid, the master disk 10A is uniformly pressed against the slave disk 14 over the whole transfer surface thereof on which the concave-convex shape is formed, so as to be held in precise and close contact with the slave disk 14.

In this state, when a recording medium is manufactured, the magnetic transfer operation is performed according to the above described magnetic transfer procedure, so that the transfer information expressed by the concave-convex shape formed on the master disk 10A is magnetically transferred to the slave disk 14.

As described above, according to the transfer apparatus, the transfer method, and the recording medium according to embodiments of the present invention, the master carrier and the slave medium are precisely positioned to each other by the supply device, and the work for attaching the flexible film or the master carrier is simplified. As a result, it is possible to perform the transfer operation which is efficient and excellent in productivity.

## Claims

1. A transfer apparatus comprising:
a master carrier (10A, 10B) on which a minute concave-convex shape is formed;
a slave medium (14) to which the concave-convex shape or transfer information expressed by the concave-convex shape is to be transferred; and
a holder (2) which holds the slave medium and to which the master carrier is fixed.

2. The transfer apparatus according to claim 1, wherein
the mater carrier has a periphery where the concave-convex shape is not formed and
the master carrier (10A, 10B) is fixed to the holder (2) at the periphery.

3. The transfer apparatus according to claim 1, further comprising:
a flexible film (11) which presses the master carrier (10A, 10B) against the slave medium (14) by a fluid pressure, wherein
the flexible film is fixed to the holder (2) at a periphery of the flexible film and
the master carrier is fixed to the holder through the flexible film by fixing the master carrier to a central part of the flexible film.

4. The transfer apparatus according to one of claim 1, claim 2 and claim 3, further comprising:
a space (19A, 19B) formed between the holder (2) and the master carrier (10A, 10B);
a pressing device which supplies fluid into the space; and
a pressure reducing device which discharges fluid in a space in the holder except the space formed between the holder and the master carrier.

5. The transfer apparatus according to claim 4, wherein
the space (19A, 19B) is formed by fixing the master carrier (10A, 10B) on a hole formed in the holder (2).

6. The transfer apparatus according to one of claim 1, claim 2, claim 3, claim 4 and claim 5, wherein
the master carrier (10A, 10B) is fixed to the holder (2) by at least one or more methods of an adhesive, welding, fixing by a fixing device, and joining by magnetic force.

7. The transfer apparatus according to one of claim 1, claim 2, claim 3, claim 4, claim 5 and claim 6, wherein
when a transfer operation is performed, the master carrier (10A, 10B) is brought into close contact with both surfaces of the slave medium (14).

8. The transfer apparatus according to one of claim 1, claim 2, claim 3, claim 4, claim 5, claim 6 and claim 7, further comprising
a supply device which supplies the slave medium (14) and the master carrier (10A, 10B) to the holder (2).

9. The transfer apparatus according to one of claim 1, claim 2, claim 3, claim 4, claim 5, claim 6, claim 7 and claim 8, further comprising
a holder moving device which moves the holder (2).

10. A transfer apparatus comprising:
a master carrier (10A, 10B) on which a minute concave-convex shape is formed;
a slave medium (14) to which the concave-convex shape or transfer information expressed by the concave-convex shape is to be transferred;
a holder (2) which holds the slave medium and the master carrier; and
a flexible film (11) whose periphery is fixed to the holder, and through which the master carrier is applied a pressure toward the slave medium by a fluid pressure.

11. A transfer method for transferring a minute concave-convex shape formed on a master carrier (10A, 10B) or transfer information expressed by the concave-convex shape to a slave medium (14) by bringing the master carrier into close contact with the slave medium, and by pressing the master carrier by fluid pressure,
wherein the master carrier is fixed to a holder (2) which holds the slave medium, the transfer method comprising the step of
supplying the fluid between the holder and the master carrier, whereby the master carrier is pressed and brought into close contact with the slave medium held by the holder.

12. The transfer method according to claim 11,
wherein the master carrier (10A, 10B) is fixed to the holder (2) at a periphery of the master carrier on which the concave-convex shape is not formed.

13. The transfer method according to claim 11,
wherein a flexible film (11) is fixed to the holder (2) at a periphery of the flexible film,
the master carrier (10A, 10B) is fixed to the holder through the flexible film, by fixing a central part of the master carrier to a center of a surface of the flexible film, and
the master carrier is pressed to be brought into close contact with the slave medium (14) by pressing the master carrier through the flexible film.

14. A recording medium manufactured by transferring a minute concave-convex shape formed on a master carrier (10A, 10B) or transfer information expressed by the concave-convex shape to a slave medium (14) by using the transfer method according to one of claim 11, claim 12 and claim 13.

15. A magnetic recording apparatus including a recording medium manufactured by transferring a minute concave-convex shape formed on a master carrier (10A, 10B) or transfer information expressed by the concave-convex shape to a slave medium (14) by using the transfer method according to one of claim 11, claim 12 and claim 13.
